# EUROPEAN PATENT SPECIFICATION

(11) **EP 4 354 616 B1**
(45) Date of publication and mention of the grant of the patent: **07.10.2026**
(21) Application number: 23827419.5
(22) Date of filing: 12.06.2023
(51) Int. Cl.: H01M 50/231, H01M 50/224, B32B 15/02, B32B 15/01, H01M 50/204, H01M 50/24, H01M 50/282, H01M 50/30, H01M 50/211, H01M 10/647, H01M 10/613

(54) **BATTERY MODULE FRAME**
BATTERIEMODULRAHMEN
CADRE DE MODULE DE BATTERIE

(30) Priority: 21.06.2022 KR 20220075257; 23.12.2022 KR 20220182542
(43) Date of publication of application: 17.04.2024
(73) Proprietor: LG Energy Solution, Ltd., Seoul 07335 (KR)
(72) Inventor: JANG, Byung Do, Daejeon 34122 (KR); LEE, Hyoung Suk, Daejeon 34122 (KR); SHIN, Ju Hwan, Daejeon 34122 (KR); LEE, Jae Hyun, Daejeon 34122 (KR); KIM, Ki Young, Daejeon 34122 (KR)
(74) Representative: Plasseraud IP
(86) International application number: PCT/KR2023/007996
(87) International publication number: WO 2023/249299

(56) References cited:
- EP-A1- 3 579 294
- EP-A1- 3 731 336
- WO-A1-2020/075962
- WO-A1-2020/225313
- CN-A- 113 826 272
- DE-A1- 102010 024 320
- DE-A1- 102019 219 792
- JP-A- 2020 507 891
- KR-A- 20180 091 301
- US-A1- 2022 140 432
- US-A1- 2022 231 359

## Description

### [Technical Field]

The present invention relates to a battery module frame, which can suppress the spread of secondary damage such as fire or explosion outside the frame by preventing the flame from being exposed to the outside of the frame even if the battery cells mounted inside the frame overheat and generate flames.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the cell case. In a secondary battery, an electrode assembly mounted inside the battery case is a charge and dischargeable power generator consisting of a laminated structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

In addition, if the secondary batteries are grouped together in the form of modules or packs, a thermal propagation phenomenon occurs in which the thermal runaway of one secondary battery continuously overheats the other secondary batteries in the vicinity. Furthermore, if the flame generated by the overheated secondary battery is exposed to the outside, it can damage the surrounding devices and spread to secondary damage such as fire or explosion, so it is necessary to take measures against this fire risk.

### [Prior Art Documents]

(Patent reference 001) Korean Patent Publication No. 2020-0078344 (published on July 1, 2020)

Documents DE 10 2019 219792 A1, WO 2020/225313 A1 and EP 3731336 A1 disclose battery module frames.

DE 10 2010 024320 A1 discloses a battery module which is connected to a mounting portion of a vehicle via a support structure. The support structure comprises three layers of aluminium material wherein the central layer may comprise an aluminium foam.

EP 3 579 294 A1 discloses a battery pouch which is made from a laminate material. The respective layers may be aluminium on the top and bottom and an aluminium mesh material in the centre

### [Description of the Invention]

### [Technical Problem]

The present invention aims to provide a battery module frame that can suppress the spread of secondary damage such as fire or explosion by preventing the flame from being exposed outside the frame even if the battery cells mounted inside overheat and generate a flame.

However, the technical problems that the present invention seeks to address are not limited to those described above, and other challenges not mentioned will be apparent to those of ordinary skill in the art from the following description of the invention.

### [Technical Solution]

To this end, the invention relates to a battery module frame according to claim 1. The battery module frame after the invention may present one or more feature from dependent claims 2 to 13, in any combination allowed by the claims.

### [Advantageous Effects]

The battery module frame of the present invention having the above configuration is made of a composite material in which a structural layer of aluminum and a metal layer of a mesh structure sandwiched therebetween, so that a lightweight frame structure is formed, and at the same time, even if a flame occurs inside, a flame extinguishing effect is produced through the mesh structure, and the flame is not discharged to the outside.

In addition, by embedding the mesh structure and wrapping the outside with a structural layer made of aluminum, it is easy to implement assembly structures such as welding and bolting.

In addition, risk of fire can also be further reduced by optimizing the placement and shape of the ventilation portion to ensure that flames from within are effectively extinguished.

However, the technical effects of the present invention are not limited to those described above, and other effects not mentioned will be apparent to one of ordinary skill in the art from the following description of the invention.

### [Brief Description of the Drawings]

The following drawings accompanying this specification illustrate preferred exemplary embodiments of the present invention and are intended to serve as a further understanding of the technical ideas of the present invention in conjunction with the detailed description of the invention that follows, so the present invention is not to be construed as limited to what is shown in such drawings.
FIG. 1 is a drawing illustrating an example of a battery module including a battery module frame of the present invention.
FIG. 2 is a drawing illustrating a cross-sectional structure of the battery module frame prior to press molding.
FIG. 3 is a drawing illustrating one example of forming a main frame via press molding.
FIG. 4 is a drawing illustrating an exemplary embodiment in which ventilation holes are formed in a top plate.
FIG. 5 is a drawing illustrating a mesh structure of the main frame and top plate.
FIG. 6 is a drawing illustrating one example of bolting the main frame and top plate together.
FIG. 7 is a drawing illustrating an arrangement structure of inner and outer ventilation portions.

### [Best Mode for Carrying out the Invention]

The present invention may have various modifications and various examples, and specific examples are illustrated in the drawings and described in detail in the description.

However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

**In** addition, when a part of a layer, a film, a region or a plate is disposed "on" another part, this includes not only a case in which one part is disposed "directly on" another part, but a case in which a third part is interposed there between. **In** contrast, when a part of a layer, a film, a region or a plate is disposed "under" another part, this includes not only a case in which one part is disposed "directly under" another part, but a case in which a third part is interposed there between. **In** addition, in this application, "on" may include not only a case of disposed on an upper part but also a case of disposed on a lower part.

The present invention relates to a battery module frame accommodating a plurality of battery cells therein, wherein, in one example, the battery module frame includes a first layer made of aluminum or aluminum alloy material; a second layer made of metallic material with a mesh structure, and stacked over the first layer; and a third layer made of aluminum or aluminum alloy material, and stacked over the second layer.

The battery module frame of the present invention having the above configuration is composed of a composite material including a structural layer of aluminum and a metal layer of a mesh structure sandwiched therebetween, thereby forming a lightweight frame structure, and at the same time, even if a flame occurs inside, the mesh structure produces an anti-inflammatory effect and prevents the flame from being discharged to the outside.

In addition, by embedding the mesh structure and wrapping the outside with a structural layer made of aluminum, it is easy to implement assembly structures such as welding and bolting.

### [Mode for Carrying Out the invention]

Hereinafter, specific embodiments of the present invention will be described in detail with reference to the accompanying drawings. For reference, the directions of front, back, up, down, left, and right used in the following description to designate relative positions are intended to aid in the understanding of the invention, and refer to the directions shown in the drawings unless otherwise specified.

### (First Embodiment)

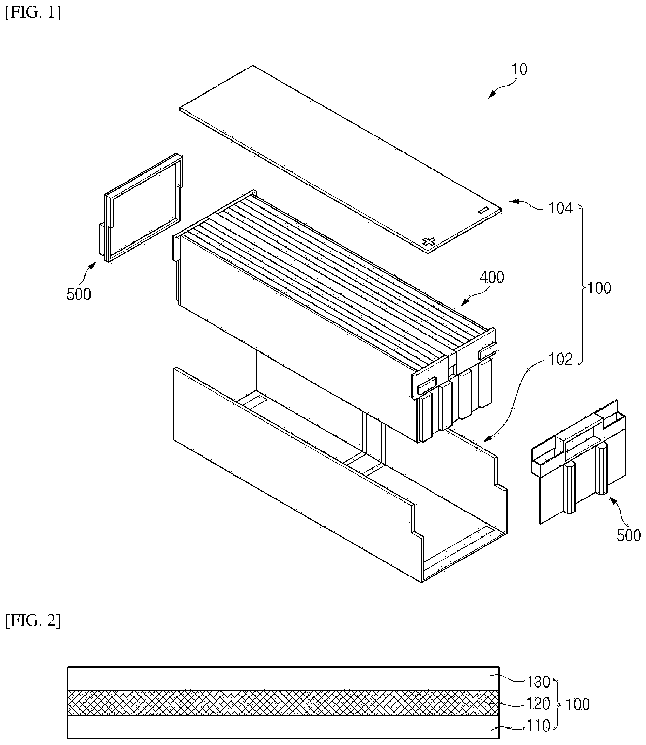

FIG. 1 is a drawing illustrating an example of a battery module 10 including a battery module frame 100 of the present invention. The battery module 10 refers to a battery assembly in which battery cells are grouped in a certain number and enclosed in a frame to protect them from external shock, heat, vibration, and the like. The battery module 10 includes a plurality of battery cells connected in series and/or parallel to each other and is recessed within a battery module frame 100, which is a mechanical structure.

Each battery cell is the source of storing energy and delivering it to the outside when needed, but battery cells alone have a small capacity, so modules are made of them, and then several modules are combined to make a large battery pack.

The present invention relates to a battery module frame 100, which is a mechanical structure that protects a plurality of battery cells. A battery module 10, shown in FIG. 1 as one example, includes a battery cell assembly 400 in which a plurality of battery cells is connected in series and/or parallel to form an assembly. Both ends of the battery cell assembly 400 are provided with structures that are mechanically and electrically coupled to an end plate assembly 500.

In addition, battery module frame 100 further includes a main frame 102, which forms a "U"-shaped cross-section to form a space therein to accommodate the battery cell assembly 400, and a top plate 104 covering an open top surface of the main frame 102. Here, both open sides of the battery module frame 100 are coupled to an end plate assembly 500 to seal the battery module 10, and extensively, the end plate assembly 500 can also be included in the battery module frame 100.

The battery module 10 has a polyhedral shape, and in FIG. 1, a hexagonal shape, which accommodates a plurality of battery cells. The cross-sectional structure of the battery module frame 100 is shown in FIG. 2. That is, FIG. 2 shows the cross-sectional structure of the main frame 102 and the top plate 104, and furthermore, the end plate assembly 500 may also have the cross-sectional structure of FIG. 2.

Referring to FIG. 2, the battery module frame 100 includes a first layer 110 made of aluminum or aluminum alloy material, a second layer 120 made of a metal material with a mesh structure stacked over the first layer 110, and a third layer 130 made of aluminum or aluminum alloy material stacked over the second layer 120.

In other words, the battery module frame 100 of the present invention is made of a composite material including a structural layer of a first layer 110 and a third layer 130 made of aluminum material, and a metal layer with a mesh structure sandwiched between the structural layers. When referring to the structural layers, it is meant that the first layer 110 and the third layer 130 made of aluminum material are the layers that play a role in maintaining the mechanical structure of the battery module frame 100.

The second layer 120, which is sandwiched between the first layer 110 and the third layer 130 made of aluminum material, is made of a metal layer with a mesh structure. The mesh structure metal layer can be broadly understood as a porous metal layer. For example, a metal mesh, a wire mesh, a metal thin film with multiple through holes, etc. can form the second layer 120. Alternatively, a flat chunk of wire spiraled around a thin metal thread can be inserted into a metal layer with a mesh structure.

Since the battery module frame 100 of the present invention includes a mesh metal layer in the middle while applying an aluminum material as a structural layer, it is possible to implement a lightweight frame structure by reducing the weight of the mesh structure in addition to the lightweighting by the aluminum material.

In addition, the battery module frame 100 of the present invention has a second layer 120 of a mesh structure interposed between the first layer 110 and the third layer 130 made of an aluminum material, which not only passes the flame generated during the thermal runaway of the battery cell and splits it, but also produces an endothermic reaction that absorbs the energy of the flame, resulting in a temperature reduction and anti-inflammatory effect.

More specifically, the second layer 120 with a mesh structure has a plurality of small holes, so that gases such as gas or steam can easily pass through the second layer 120, but flames are relatively difficult to pass through.

In addition, the mesh structure of the second layer 120 also serves to absorb and dissipate the heat generated by the combustible gas and air mixture inside the battery cell when it is ignited, thereby lowering the combustion temperature so that the surrounding gas does not reach its spontaneous ignition temperature. This is because the hot gas passes through the second layer 120 of the mesh structure and loses heat to the porous structure of the metallic material. That is, the second layer 120 is composed of a metallic material containing numerous holes and functions as a flame arrester with a very large cross-sectional area.

Thus, as the flame generated by the thermal runaway of the battery cell passes through the battery module frame 100 of the present invention, the flame is deprived of enough heat to no longer be sustained by the flame, thereby effectively suppressing the heat transfer phenomenon or external fire.

And, in an exemplary embodiment of the present invention, the second layer 120, which is a mesh metal layer, may be made of a metal material having a higher melting point than the melting point of the first layer 110 and the third layer 130 made of aluminum. For example, the metallic material forming the second layer 120 may be a steel or stainless-steel material.

When a flame is generated in the battery cell assembly 400, it attempts to melt the first layer 110 of the battery module frame 100 and eject to the outside. In order for the second layer 120, which is a mesh metal layer, to maintain its fire-extinguishing function for an extended period of time, the mesh structure needs to be heat resistant, so the second layer 120 preferably has a higher melting point compared to the first layer 110 and third layer 130, which are aluminum materials.

Furthermore, the second layer 120 is preferably selected to be made of a material that not only has the ability to extinguish flames, but also has the mechanical properties to withstand explosive pressure. In this regard, the second layer 120 may be made of a steel or stainless-steel material that is heat resistant and has good mechanical strength.

For example, the second layer 120 may be made of a heat-resistant stainless steel. The heat-resistant stainless steel may be a ferritic stainless-steel alloy such as X10CrAlSi7, X10CrAl13, X10CrAl18, and X18CrN28, or an austenitic stainless-steel alloy such as X15CrNiSi20-12, X15CrNiSi25-20, X15CrNiSi25-21, and X12CrNiTi18-10, or nickelchromium stainless steel alloys such as NiCr15Fe, NiCr23Fe, NiCr22Mo9Nb, NiCr21Mo, and NiCr28FeSiCe.

As such, because the second layer 120 of the mesh structure is in the form of a thin plate, the increase in size of the battery module frame 100 can be suppressed. Furthermore, since the second layer 120 has a plurality of holes, the increase in weight can also be suppressed. Thus, the battery module frame 100 of the present invention improves the safety of the battery module 10 by suppressing an increase in the size or weight of the battery module 10, and furthermore of the battery pack, while preventing flames from escaping to the outside in the event of a flame eruption from the battery cells.

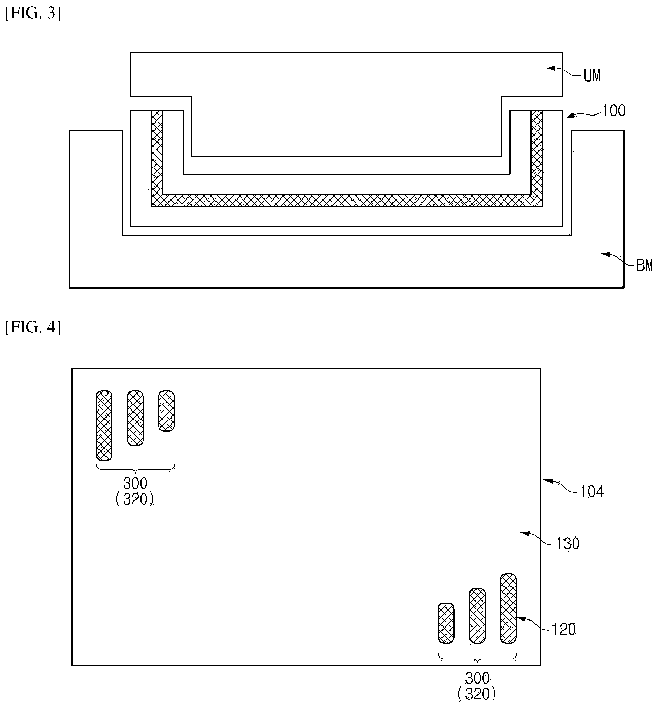

Meanwhile, FIG. 3 is a drawing illustrating an example of forming the main frame 102 via press molding. Referring to FIG. 3, the battery module frame 100 of the present invention may be molded at once via press molding in a flat plate state in which the first layer 110 and the third layer 130 are all stacked.

This is because the second layer 120 of the mesh structure is a thin plate type, for example, the second layer 120 has a thin thickness of about 1 to 2 mm, so that the second layer 120 of the mesh structure can be manufactured in a flat plate form (see FIG. 2) between the first layer 110 and the third layer 130 of the aluminum material, and then the battery module frame 100 of the flat plate form can be placed between the upper mold (UM) and the bottom mold (BM) as shown in FIG. 3 and pressed to make the main frame 102 with a "U"-shaped cross-section.

In other words, the first layer 110 and the third layer 130 are made of aluminum, which is easy to plasticize and is suitable for press processing, while the metal material forming the second layer 120 is made of steel or stainless steel, which has high mechanical strength but is thin enough to be processed by pressing.

As such, the battery module frame 100 of the present invention can be transformed into various shapes by press processing a preliminary frame in the form of a flat plate having a second layer 120 of a mesh structure joined between a first layer 110 and a third layer 130 of an aluminum material, so that it can be kept on a par with a conventional frame without a mesh metal layer in terms of productivity.

### (Second Embodiment)

Meanwhile, in a second embodiment of the present invention, the top plate 104 forming the battery module frame 100 may be formed with ventilation holes. FIG. 4 illustrates an exemplary embodiment in which ventilation holes are formed in the top plate 104.

For reference, the second embodiment illustrates that the ventilation holes are formed in the top plate 104 of the battery module frame 100. This is in consideration of the flame propagating mainly upwards, although it is possible that the main frame 102 may also have ventilation holes. Here, the location of the ventilation holes may need to be selected in consideration of external fires or secondary damage to surrounding parts caused by hot gases or flames ejected from the ventilation holes.

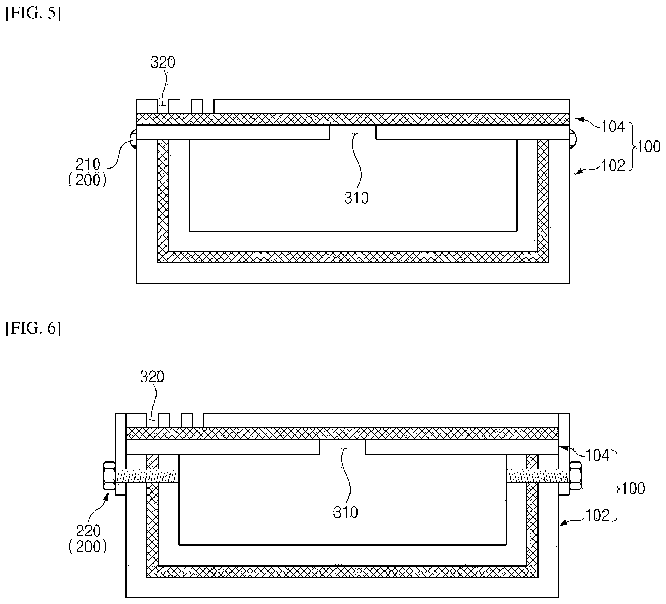

Referring to FIG. 4, the top plate 104, which forms the top surface of the battery module frame 100, has an outer ventilation portion 320 formed in part of the third layer 130, and the second layer 120 is exposed to the outside through the outer ventilation portion 320. Also, referring to FIGS. 5 through 7, an inner ventilation portion 310 is formed in the first layer 110 of the top plate 104 to expose the second layer 120.

The ventilation portion 300, including the inner and outer ventilation portions 310, 320, is an incised portion of the first layer 110 and third layer 130, respectively, of the battery module frame 100, and the second layer 120 is exposed by the ventilation portion 300. When a flame is generated within the battery module 10, causing the temperature and pressure to rise, part of the battery module frame 100 melts, causing the flame to erupt to the outside. The location of these flames erupting may be determined by the origin of the fire or the localized strength of the battery module frame 100, which is difficult to predict.

Therefore, in the second embodiment of the present invention, a ventilation portion 300 is intentionally formed in which a part of the first layer 110 and the third layer 130 are each incised, and the location of the ventilation portion 300 is restricted so that the flame erupts from a predetermined point, that is, from the ventilation portion 300. Thus, by properly designing the location of the ventilation portion 300, the risk of secondary damage, such as an external fire, can be greatly reduced.

**In** an exemplary embodiment of the present invention, a plurality of ventilation portions 300 may be formed diagonally on one surface, for example, the top surface of the battery module frame 100, as illustrated. Since the ventilation portion 300 is a region where the flame passes through the second layer 120 made of a mesh metal layer to the outside of the third layer 130, forming a plurality of ventilation portions 300 allows the flame to travel through the second layer 120 for a sufficient distance and time to lose heat.

Furthermore, it may be desirable that the inner ventilation portion 310 formed in the first layer 110 and the outer ventilation portion 320 formed in the third layer 130 do not overlap each other. This is because a direct connection between the inner ventilation portion 310 and the outer ventilation portion 320 would not provide a sufficient flame path for the second layer 120 to exert its anti-inflammatory action.

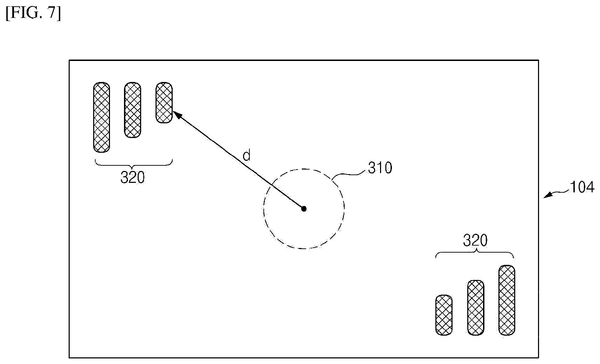

For example, as shown in FIG. 7, the inner ventilation portion 310 formed in the first layer 110 and the outer ventilation portion 320 formed in the third layer 130 may be diagonally spaced apart, centered on the inner ventilation portion 310. By this arrangement of the inner ventilation portion 310 and the outer ventilation portion 320, the inner ventilation portion 310 and the outer ventilation portion 320 can be spaced apart without overlapping each other.

Further, the outer ventilation portion 320 may be configured in such a way that a plurality of ventilation holes forms a group, in which case it may be desirable to have the outer ventilation portion 320 have a stepped size arrangement in which the ventilation area of the ventilation hole increases as the distance d from the inner ventilation portion 310 increases. This is because it is advantageous from a fire-extinguishing perspective to have a long flame path through the second layer 120 with a mesh structure so that more of the sufficiently heat-deprived flame is exhausted through the outer ventilation holes that are farther away (d) from the inner ventilation portion 310.

Furthermore, considering that the flame is mainly directed toward the top surface of the battery module frame 100, it is possible to make the mesh structure of the second layer 120 included on the top surface of the battery module frame 100, that is, the mesh structure of the top plate 104, denser than the mesh structure of the second layer 120 included on the other surface. This is because the denser the mesh structure, the better the flame suppression as the heat transfer area increases.

Further, the first layer 110 or the third layer 130, which is made of aluminum, may have a fastening portion 200 formed thereon, and the fastening portion 200 may be a welding portion 210 or a bolting portion 220. FIG. 5 illustrates an example where the fastening portion 200 is formed as a welding portion 210, and FIG. 6 illustrates an example where the fastening portion 200 is formed as a bolting portion 220.

The battery module frame 100 of the present invention includes a mesh metal layer for flame suppression, but the second layer 120 with a mesh structure is embedded between the first layer 110 and the third layer 130, which are made of aluminum, so that the first layer 110 and the third layer 130 form a solid structural layer of the battery module frame 100. Therefore, the battery module frame 100 of the present invention can easily implement a fastening structure such as welding or bolting by embedding a mesh structure and wrapping the outside of it with a structural layer made of aluminum.

For reference, FIGS. 5 and 6 illustrate an example in which welding portion 210 and bolting portion 220, respectively, constitute fastening portion 200, although it is understood that a single battery module frame 100 may include a combination of a welding portion 210 and bolting portion 220 as a fastening portion 200.

### [Reference numerals]

10: BATTERY MODULE
100: BATTERY MODULE FRAME
102: MAIN FRAME
104: TOP PLATE
110: FIRST LAYER
120: SECOND LAYER
130: THIRD LAYER
200: FASTENING PORTION
210: WELDING PORTION
220: BOLTING PORTION
300: VENTILATION PORTION
310: INNER VENTILATION PORTION
320: OUTER VENTILATION PORTION
400: BATTERY CELL ASSEMBLY
500: END PLATE ASSEMBLY
UM: UPPER MOLD
BM: BOTTOM MOLD
surface. This is because the denser the mesh structure, the better the flame suppression as the heat transfer area increases.

Further, the first layer 110 or the third layer 130, which is made of aluminum, may have a fastening portion 200 formed thereon, and the fastening portion 200 may be a welding portion 210 or a bolting portion 220. FIG. 5 illustrates an example where the fastening portion 200 is formed as a welding portion 210, and FIG. 6 illustrates an example where the fastening portion 200 is formed as a bolting portion 220.

The battery module frame 100 of the present invention includes a mesh metal layer for flame suppression, but the second layer 120 with a mesh structure is embedded between the first layer 110 and the third layer 130, which are made of aluminum, so that the first layer 110 and the third layer 130 form a solid structural layer of the battery module frame 100. Therefore, the battery module frame 100 of the present invention can easily implement a fastening structure such as welding or bolting by embedding a mesh structure and wrapping the outside of it with a structural layer made of aluminum.

For reference, FIGS. 5 and 6 illustrate an example in which welding portion 210 and bolting portion 220, respectively, constitute fastening portion 200, although it is understood that a single battery module frame 100 may include a combination of a welding portion 210 and bolting portion 220 as a fastening portion 200.

The present invention has been described above in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of them at the time of filing the present application.

### [Reference numerals]

10: BATTERY MODULE
100: BATTERY MODULE FRAME
102: MAIN FRAME
104: TOP PLATE
110: FIRST LAYER
120: SECOND LAYER
130: THIRD LAYER
200: FASTENING PORTION
210: WELDING PORTION
220: BOLTING PORTION
300: VENTILATION PORTION
310: INNER VENTILATION PORTION
320: OUTER VENTILATION PORTION
400: BATTERY CELL ASSEMBLY
500: END PLATE ASSEMBLY
UM: UPPER MOLD
BM: BOTTOM MOLD

## Claims

1. A battery module frame (100) for accommodating a plurality of battery cells inside, **characterized in that** the battery module frame (100) is made of a composite material including:
a first layer (110) made of aluminum or aluminum alloy material;
a second layer (120) made of metallic material with a mesh structure, and stacked over the first layer (110); and
a third layer (130) made of aluminum or aluminum alloy material, and stacked over the second layer (120).

2. The battery module frame (100) of claim 1, wherein the first (110) to third (130) layers are molded together by press processing in a stacked state.

3. The battery module frame (100) of claim 2, wherein a fastening portion (200) is formed in the first (110) or third layer (130).

4. The battery module frame (100) of claim 3, wherein the fastening portion (200) is a welding portion (210) or a bolting portion (220).

5. The battery module frame (100) of claim 1, wherein the second layer (120) is made of a metal material having a melting point higher than a melting point of the first (110) and third (130) layers.

6. The battery module frame (100) of claim 5, wherein the metal material forming the second layer is steel or stainless steel.

7. The battery module frame (100) of claim 1, wherein at least one side of the battery module frame (100) is formed with a ventilation portion (300) exposing the second layer (120).

8. The battery module frame (100) of claim 7, wherein the ventilation portion (300) is formed on a top surface of the battery module frame (100).

9. The battery module frame (100) of claim 8, wherein the ventilation portion (300) is formed in plurality spaced in a diagonal direction.

10. The battery module frame (100) of claim 8, wherein the mesh structure of the second layer (120) included on a top surface of the battery module frame (100) is denser than the mesh structure of the second layer (120) included on other surfaces.

11. The battery module frame (100) of claim 8, wherein the ventilation portion (300) includes an inner ventilation portion (310) formed in the first layer (110) and an outer ventilation portion (320) formed in the third layer (130) which do not overlap each other.

12. The battery module frame (100) of claim 11, wherein the outer ventilation portion (320) formed in the third layer (130) comprises two groups diagonally spaced apart from each other, and centered on the inner ventilation portion (310) formed in the first layer (110).

13. The battery module frame (100) of claim 12, wherein the outer ventilation portion (320) includes a plurality of ventilation holes, with the ventilation area increasing as the distance from the inner ventilation portion (310) increases.

## Patentansprüche

1. Batteriemodulrahmen (100) zur Aufnahme einer Vielzahl von Batteriezellen im Inneren, **dadurch gekennzeichnet, dass** der Batteriemodulrahmen (100) aus einem Verbundwerkstoff hergestellt ist, der Folgendes umfasst:
eine erste Schicht (110) aus Aluminium- oder Aluminiumlegierungsmaterial;
eine zweite Schicht (120) aus metallischem Material mit einer Netzstruktur, die über der ersten Schicht (110) gestapelt ist; und
eine dritte Schicht (130) aus Aluminium- oder Aluminiumlegierungsmaterial, die über der zweiten Schicht (120) gestapelt ist.

2. Batteriemodulrahmen (100) nach Anspruch 1, wobei die erste (110) bis dritte (130) Schicht in einem gestapelten Zustand durch Pressverarbeitung zusammengeformt werden.

3. Batteriemodulrahmen (100) nach Anspruch 2, wobei ein Befestigungsabschnitt (200) in der ersten (110) oder dritten Schicht (130) gebildet ist.

4. Batteriemodulrahmen (100) nach Anspruch 3, wobei der Befestigungsabschnitt (200) ein Schweißabschnitt (210) oder ein Verschraubungsabschnitt (220) ist.

5. Batteriemodulrahmen (100) nach Anspruch 1, wobei die zweite Schicht (120) aus einem Metallmaterial mit einem Schmelzpunkt hergestellt ist, der höher ist als ein Schmelzpunkt der ersten (110) und dritten (130) Schicht.

6. Batteriemodulrahmen (100) nach Anspruch 5, wobei das die zweite Schicht bildende Metallmaterial Stahl oder Edelstahl ist.

7. Batteriemodulrahmen (100) nach Anspruch 1, wobei mindestens eine Seite des Batteriemodulrahmens (100) mit einem Belüftungsabschnitt (300) gebildet ist, der die zweite Schicht (120) freilegt.

8. Batteriemodulrahmen (100) nach Anspruch 7, wobei der Belüftungsabschnitt (300) auf einer Oberseite des Batteriemodulrahmens (100) gebildet ist.

9. Batteriemodulrahmen (100) nach Anspruch 8, wobei der Belüftungsabschnitt (300) in einer Vielzahl in einer diagonalen Richtung beabstandet gebildet ist.

10. Batteriemodulrahmen (100) nach Anspruch 8, wobei die Netzstruktur der zweiten Schicht (120), die auf einer Oberseite des Batteriemodulrahmens (100) enthalten ist, dichter ist als die Netzstruktur der zweiten Schicht (120), die auf anderen Oberflächen enthalten ist.

11. Batteriemodulrahmen (100) nach Anspruch 8, wobei der Belüftungsabschnitt (300) einen inneren Belüftungsabschnitt (310), der in der ersten Schicht (110) gebildet ist, und einen äußeren Belüftungsabschnitt (320), der in der dritten Schicht (130) gebildet ist, umfasst, die sich nicht überlappen.

12. Batteriemodulrahmen (100) nach Anspruch 11, wobei der in der dritten Schicht (130) gebildete äußere Belüftungsabschnitt (320) zwei Gruppen umfasst, die diagonal voneinander beabstandet und auf den in der ersten Schicht (110) gebildeten inneren Belüftungsabschnitt (310) zentriert sind.

13. Batteriemodulrahmen (100) nach Anspruch 12, wobei der äußere Belüftungsabschnitt (320) eine Vielzahl von Belüftungslöchern umfasst, wobei die Belüftungsfläche mit zunehmendem Abstand vom inneren Belüftungsabschnitt (310) zunimmt.

## Revendications

1. Cadre de module de batterie (100) pour loger une pluralité d'éléments de batterie à l'intérieur, **caractérisé en ce que** le cadre de module de batterie (100) est constitué d'un matériau composite comprenant :
une première couche (110) en matériau d'aluminium ou d'alliage d'aluminium ;
une deuxième couche (120) en matériau métallique avec une structure maillée, et empilée sur la première couche (110) ; et
une troisième couche (130) en matériau d'aluminium ou d'alliage d'aluminium, et empilée sur la deuxième couche (120).

2. Cadre de module de batterie (100) selon la revendication 1, dans lequel les première (110) à troisième (130) couches sont moulées ensemble par traitement à la presse dans un état empilé.

3. Cadre de module de batterie (100) selon la revendication 2, dans lequel une partie de fixation (200) est formée dans la première (110) ou la troisième couche (130).

4. Cadre de module de batterie (100) selon la revendication 3, dans lequel la partie de fixation (200) est une partie de soudage (210) ou une partie de boulonnage (220).

5. Cadre de module de batterie (100) selon la revendication 1, dans lequel la deuxième couche (120) est constituée d'un matériau métallique ayant un point de fusion supérieur à un point de fusion des première (110) et troisième (130) couches.

6. Cadre de module de batterie (100) selon la revendication 5, dans lequel le matériau métallique formant la deuxième couche est de l'acier ou de l'acier inoxydable.

7. Cadre de module de batterie (100) selon la revendication 1, dans lequel au moins un côté du cadre de module de batterie (100) est formé avec une partie de ventilation (300) exposant la deuxième couche (120).

8. Cadre de module de batterie (100) selon la revendication 7, dans lequel la partie de ventilation (300) est formée sur une surface supérieure du cadre de module de batterie (100).

9. Cadre de module de batterie (100) selon la revendication 8, dans lequel la partie de ventilation (300) est formée en une pluralité espacée dans une direction diagonale.

10. Cadre de module de batterie (100) selon la revendication 8, dans lequel la structure maillée de la deuxième couche (120) incluse sur une surface supérieure du cadre de module de batterie (100) est plus dense que la structure maillée de la deuxième couche (120) incluse sur d'autres surfaces.

11. Cadre de module de batterie (100) selon la revendication 8, dans lequel la partie de ventilation (300) comprend une partie de ventilation intérieure (310) formée dans la première couche (110) et une partie de ventilation extérieure (320) formée dans la troisième couche (130) qui ne se chevauchent pas.

12. Cadre de module de batterie (100) selon la revendication 11, dans lequel la partie de ventilation extérieure (320) formée dans la troisième couche (130) comprend deux groupes espacés diagonalement l'un de l'autre, et centrés sur la partie de ventilation intérieure (310) formée dans la première couche (110).

13. Cadre de module de batterie (100) selon la revendication 12, dans lequel la partie de ventilation extérieure (320) comprend une pluralité de trous de ventilation, la surface de ventilation augmentant à mesure que la distance par rapport à la partie de ventilation intérieure (310) augmente.
